# EUROPEAN PATENT APPLICATION

(11) **EP 4 583 226 A1**
(43) Date of publication of application: **09.07.2025**
(21) Application number: 22968858.5
(22) Date of filing: 20.12.2022
(51) Int. Cl.: H01M 10/054, H01M 6/14, H01M 10/42, H01M 4/13, H01M 10/058

(54) **SODIUM ION BATTERY, BATTERY MODULE, BATTERY PACK AND ELECTRICAL APPARATUS**

(71) Applicant: Contemporary Amperex Technology (Hong Kong) Limited, Central (HK)
(72) Inventor: LI, Xiaolong, Ningde, Fujian 352100 (CN); ZHANG, Xinxin, Ningde, Fujian 352100 (CN); GUO, Bingkun, Ningde, Fujian 352100 (CN); LIU, Ben, Ningde, Fujian 352100 (CN); YAO, Shikang, Ningde, Fujian 352100 (CN); ZHOU, Qicheng, Ningde, Fujian 352100 (CN); LAN, Jiadian, Ningde, Fujian 352100 (CN)
(74) Representative: Laufhütte, Dieter
(86) International application number: PCT/CN2022/140461
(87) International publication number: WO 2024/130556

(57) **Abstract**

The present application provides a sodium ion battery, comprising a positive electrode plate, a negative electrode plate and an electrolyte. The negative electrode plate comprises a negative electrode current collector and a primer coating layer formed on the surface of the negative electrode current collector. The electrolyte comprises a first sodium salt, and the first sodium salt includes at least one of a sulfur-containing organic sodium salt and a boron-containing organic sodium salt, and the sodium ion battery satisfies the following relationship: 0.84 ≤ Y - 0.01X ≤ 5.84, wherein X g/m² is the areal density of the primer coating layer, and Y% is the mass content of the first sodium salt, based on the total mass of the electrolyte.

## Description

### Technical Field

The present application relates to the technical field of sodium ion batteries, and in particular to a sodium ion battery, a battery module, a battery pack and a power consuming device.

### Background Art

At present, lithium-ion batteries occupy the core position of power batteries. At the same time, lithium-ion batteries are also facing great challenges, such as the increasing shortage of lithium resources, rising prices of upstream materials, lagging development of recycling technology, and the low recycling rate of old batteries. Sodium ion batteries can be charged and discharged by means of the intercalation and deintercalation process of sodium ions between the positive and negative electrodes. Moreover, sodium resources are far more abundant than lithium, more widely distributed, and much cheaper than lithium. Therefore, sodium ion batteries have become a new generation of electrochemical systems with great potential to replace lithium ion batteries. However, the sodium ion battery, which is widely studied at present, has poor high-temperature cycling performance and is accompanied by serious high-temperature gas production, which seriously limits its promotion and use.

### Summary

In view of the problems mentioned in the background art, the present application provides a sodium ion battery, which aims to increase the high-temperature cycling performance of the sodium ion battery and improve the high-temperature gas production phenomenon of the sodium ion battery.

In order to achieve the above objective, the present application provides a sodium ion battery, comprising a positive electrode plate, a negative electrode plate and an electrolyte. The negative electrode plate comprises a negative electrode current collector and a primer coating layer formed on the surface of the negative electrode current collector. The electrolyte comprises a first sodium salt, and the first sodium salt includes at least one of a sulfur-containing organic sodium salt and a boron-containing organic sodium salt,
the sodium ion battery satisfies the following relationship: 0.84 ≤ Y - 0.01X ≤ 5.84,
wherein X g/m² is the areal density of the primer coating layer, and Y% is the mass content of the first sodium salt, based on the total mass of the electrolyte.

According to the sodium ion battery provided by the present invention, the areal density X g/m² of the primer coating layer and the mass content Y% of the first sodium salt satisfy the relationship of 0.84 ≤ Y - 0.01X ≤ 5.84; and by adjusting and controlling the areal density of the primer coating layer and the mass content of the first sodium salt, the high-temperature cycling performance of the sodium ion battery, the high-temperature gas generation phenomenon of the sodium ion battery, and the electrochemical performance and safety performance of the sodium ion battery at a high temperature are improved.

In any embodiment, the anion of the sulfur-containing organic sodium salt includes at least one of the structures represented by formula I and formula II, 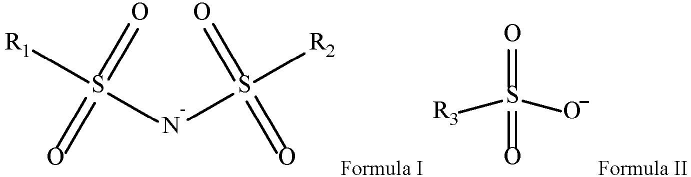 wherein R₁ and R₂ are each independently selected from at least one of fluorine and substituted or unsubstituted C₁-C₆ alkyl, and R₃ is substituted or unsubstituted C₁-C₆ alkyl.

In any embodiment, the sulfur-containing organic sodium salt includes one or more of sodium trifluoromethanesulfonate, sodium bis(fluoromethanesulfonyl)imide, sodium bis(trifluoromethanesulfonyl)imide, and sodium (fluorosulfonyl) (trifluoromethanesulfonyl)imide.

Selecting a suitable sulfur-containing organic sodium salt can improve the high-temperature cycling performance of the sodium ion battery and improve the high-temperature gas production phenomenon of the sodium ion battery.

In any embodiment, the sulfur-containing organic sodium salt includes one or more of sodium trifluoromethanesulfonate, sodium bis(fluoromethanesulfonyl)imide, and sodium bis(trifluoromethanesulfonyl)imide.

Selecting a suitable sulfur-containing organic sodium salt can further improve the high-temperature cycling performance of the sodium ion battery and further improve the high-temperature gas production phenomenon of the sodium ion battery.

In any embodiment, the boron-containing organic sodium salt includes one or more of sodium tetraphenylborate, sodium bis(salicylic acid-2-)borate, sodium salicylate benzenediol borate, sodium difluorooxalate borate and sodium bisoxalate borate.

Selecting a suitable boron-containing organic sodium salt can improve the high-temperature cycling performance of the sodium ion battery and improve the high-temperature gas production phenomenon of the sodium ion battery.

In any embodiment, the boron-containing organic sodium salt includes one or two of sodium difluorooxalate borate and sodium bisoxalate borate.

Selecting a suitable boron-containing organic sodium salt can improve the initial coulombic efficiency and normal-temperature cycling performance of the sodium ion battery, and at the same time, the sodium ion battery has an excellent high-temperature cycling performance and less high-temperature gas production.

In any embodiment, the areal density X g/cm² of the primer coating layer is 5 g/cm² - 50 g/cm².

By controlling the areal density of the primer coating layer within an appropriate range, the sodium ion battery has an excellent high-temperature cycling performance, initial coulombic efficiency and normal-temperature cycling performance, and the high-temperature gas production and normal-temperature gas production of the sodium ion battery are less, which broadens the service temperature of the sodium ion battery.

In any embodiment, the primer coating layer comprises one or more of superconducting carbon black, Ketjen black, acetylene black, carbon nanotubes, and graphene.

In any embodiment, the electrolyte further comprises a second sodium salt, the second sodium salt including at least one of sodium hexafluorophosphate, sodium tetrafluoroborate, sodium hexafluoroarsenate, sodium perchlorate, and sodium trifluoroacetate.

The electrolyte further comprises a second sodium salt, which can improve the initial coulombic efficiency, normal-temperature cycling performance and high-temperature cycling performance of the sodium ion battery, and reduce the normal-temperature gas production and high-temperature gas production of the sodium ion battery.

In any embodiment, the sodium ion battery satisfies the following relationship: Y + Z ≥ 3 or/and Z/Y ≥ 1.21, wherein Y% is the mass content of the first sodium salt, and Z% is the mass content of the second sodium salt, based on the total mass of the electrolyte.

By adjusting and controlling the mass content of the first sodium salt and the second sodium salt to enable them to satisfy the relationship of Y + Z ≥ 3 or/and Z/Y ≥ 1.21, the initial coulombic efficiency, normal-temperature cycling performance and high-temperature cycling performance of the sodium ion battery can be improved.

In any embodiment, the mass content of the second sodium salt is 1% - 40%, based on the total mass of the electrolyte.

By controlling the mass content of the second sodium salt within an appropriate range, the initial coulombic efficiency, normal-temperature cycling performance and high-temperature cycling performance of the sodium ion battery can be improved, and the high-temperature gas production performance of the sodium ion battery can be reduced.

In any embodiment, the mass content of the second sodium salt is 7% - 35%, based on the total mass of the electrolyte.

By controlling the mass content of the second sodium salt within an appropriate range, the initial coulombic efficiency of the sodium ion battery can be increased, and at the same time the battery can have an excellent high-temperature cycling performance and normal-temperature cycling performance, such that the battery has less high-temperature gas production.

In any embodiment, the electrolyte further comprises a solvent, and the mass content of the solvent is 50% - 98%, based on the total mass of the electrolyte.

By controlling the mass content of the solvent in an appropriate range, the initial coulombic efficiency, normal-temperature cycling performance and high-temperature cycling performance of the sodium ion battery can be improved, and the high-temperature gas production of the sodium ion battery can be reduced.

In some embodiments, the mass content of the solvent is 50% - 90%, based on the total mass of the electrolyte.

By controlling the mass content of the solvent within an appropriate range, the initial coulombic efficiency and high-temperature cycling performance of the sodium ion battery can be improved, and at the same time the sodium ion battery can have excellent normal-temperature cycling performance and less high-temperature gas production.

In any embodiment, the solvent includes an ether solvent, optionally at least one of ethylene glycol dimethyl ether, diethylene glycol dimethyl ether, triethylene glycol dimethyl ether, tetraethylene glycol dimethyl ether, ethylene glycol diethyl ether, ethylene glycol ethyl methyl ether, ethylene glycol dibutyl ether, 1,3-dioxolane, 1,4-dioxane, tetrahydrofuran, methyltetrahydrofuran, 1,1,2,2-tetrafluoroethyl methyl ether, 2,2,3,3-tetrafluoropropyl methyl ether, 1,1,2,2-tetrafluoroethyl-2,2,2-trifluoroethyl ether, bis-(2,2,2-trifluoroethyl)ether, 1,1,2,2-tetrafluoroethyl-2,2,3,3-tetrafluoropropyl ether, methyl nonafluorobutyl ether, bis-(1,1,2,2-tetrafluoroethyl)ether and difluoromethyl-2,2,2-trifluoroethyl ether.

The ether solvent can improve the initial coulombic efficiency, normal-temperature cycling performance and high-temperature cycling performance of the sodium ion battery, and reduce the normal-temperature gas production phenomenon and high-temperature gas production phenomenon of the sodium ion battery, which improves the electrochemical performance and safety performance of sodium ions, and broadens the service temperature of the sodium ion battery.

In any embodiment, the sodium ion battery is a sodium battery without a negative electrode.

A second aspect of the present application provides a battery module, comprising a sodium ion battery of the first aspect.

A third aspect of the present application provides a battery pack, comprising a sodium ion battery of the first aspect or a battery module of the second aspect.

A fourth aspect of the present application provides a power consuming device, comprising at least one of a sodium ion battery of the first aspect, a battery module of the second aspect, or a battery pack of the third aspect.

### Brief Description of the Drawings

Fig. 1 is a schematic diagram of a sodium ion battery according to an embodiment of the present application;
Fig. 2 is an exploded view of the sodium ion battery according to an embodiment of the present application as shown in Fig. 1;
Fig. 3 is a schematic diagram of a battery module according to an embodiment of the present application;
Fig. 4 is a schematic diagram of a battery pack according to an embodiment of the present application;
Fig. 5 is an exploded view of the battery pack according to an embodiment of the present application as shown in Fig. 4; and
Fig. 6 is a schematic diagram of a power consuming device according to an embodiment of the present application, which uses a sodium ion battery as a power source.

### List of reference numerals:

1 - battery pack; 2 - upper box body; 3 - lower box body; 4 - battery module; 5 - sodium ion battery; 51 - housing; 52 - electrode assembly; 53 - cover plate.

### Detailed Description of Embodiments

Hereinafter, embodiments of the positive electrode active material and the preparation method therefor, the positive electrode plate, the secondary battery, the battery module, the battery pack, and the electrical device of the present application are described in detail and specifically disclosed with reference to the accompanying drawings as appropriate. However, unnecessary detailed illustrations may be omitted in some instances. For example, there are situations where detailed description of well-known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in the claims.

The "ranges" disclosed in the present application are defined in the form of lower and upper limits. A given range is defined by selecting a lower limit and an upper limit, and the selected lower and upper limits defining the boundaries of the particular range. Ranges defined in this manner may be inclusive or exclusive, and may be arbitrarily combined, that is, any lower limit may be combined with any upper limit to form a range. For example, if the ranges 60-120 and 80-110 are listed for a particular parameter, it should be understood that the ranges 60-110 and 80-120 are also contemplated. Additionally, if minimum range values 1 and 2 are listed and maximum range values 3, 4, and 5 are listed, the following ranges are all contemplated: 1-3, 1-4, 1-5, 2-3, 2-4, and 2-5. In the present application, unless stated otherwise, the numerical range "a-b" denotes an abbreviated representation of any combination of real numbers between a and b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer ≥ 2, it is equivalent to disclosing that the parameter is, for example, an integer of 2, 3, 4, 5, 6, 7, 8, 9, 10, 11, 12, etc.

All the embodiments and optional embodiments of the present application can be combined with one another to form new technical solutions, unless otherwise stated.

All the technical features and optional technical features of the present application can be combined with one another to form a new technical solution, unless otherwise stated.

Unless otherwise stated, all the steps of the present application may be performed sequentially or randomly, preferably sequentially. For example, the method comprising steps (a) and (b) indicates that the method may comprise steps (a) and (b) performed sequentially, or may also comprise steps (b) and (a) performed sequentially. For example, reference to "the method may further comprise step (c)" indicates that step (c) may be added to the method in any order, e.g., the method may comprise steps (a), (b), and (c), steps (a), (c), and (b), or also steps (c), (a), and (b), etc.

The terms "comprise" and "include" mentioned in the present application are open-ended or may also be closed-ended, unless otherwise stated. For example, "comprise" and "include" may mean that other components not listed may further be comprised or included, or only the listed components may be comprised or included.

In the present application, the term "or" is inclusive unless otherwise specified. For example, the phrase "A or B" means "A, B, or both A and B". More specifically, the condition "A or B" is satisfied by any one of the following: A is true (or present) and B is false (or not present); A is false (or not present) and B is true (or present); or both A and B are true (or present).

At a high temperature, the inorganic components in the solid electrolyte interface (SEI) of the sodium ion battery will dissolve, making the SEI film show a porous structure, and the electrolyte solution will continue to be decomposed on the surface of the negative electrode, and the SEI film will continue to decompose and regenerate, which will continuously consume the limited sodium resources in the sodium ion battery, resulting in greater self-discharge and poor cycling performance of the sodium ion battery. At the same time, at a high temperature, the positive and negative electrodes of the sodium ion battery will react chemically with the electrolyte, and the reaction will release heat and produces gases, which will lead to the volume expansion of the battery and even lead to a short circuit inside the battery in severe cases, thereby reducing the safety performance of the sodium ion battery and seriously limiting the application of the sodium ion battery.

### [Sodium ion battery]

On this basis, the present application provides a sodium ion battery, comprising a positive electrode plate, a negative electrode plate and an electrolyte. The negative electrode plate comprises a negative electrode current collector and a primer coating layer formed on the surface of the negative electrode current collector. The electrolyte comprises a first sodium salt, and the first sodium salt includes at least one of a sulfur-containing organic sodium salt and a boron-containing organic sodium salt,
the sodium ion battery satisfies the following relationship: 0.84 ≤ Y - 0.01X ≤ 5.84,
wherein X g/m² is the areal density of the primer coating layer, and Y% is the mass content of the first sodium salt, based on the total mass of the electrolyte.

As used herein, the term "sodium ion battery" is a battery that utilizes the back-and-forth migration of sodium ions between positive and negative electrodes. The negative electrode plate of the sodium ion battery can be made of any material. As an example, the sodium ion battery includes but is not limited to a sodium metal battery and a sodium metal battery without a negative electrode.

As used herein, the term "electrolyte" refers to a carrier for ion transport in the sodium ion battery, including a liquid electrolyte, a solid electrolyte or a quasi-solid electrolyte.

As used herein, the term "organic sodium salt" refers to a reaction product containing an organic acid and an inorganic base.

As used herein, the term "sulfur-containing organic sodium salt" refers to an organic sodium salt containing a sulfur element.

As used herein, the term "boron-containing organic sodium salt" refers to an organic sodium salt containing a boron element.

As used herein, the term "sodium battery without negative electrode" refers to a sodium ion battery that uses a current collector as a negative electrode in the assembly process. During the charge process of the sodium battery without a negative electrode, sodium ions are deposited on the current collector to form the negative electrode of the sodium ion battery.

In some embodiments, the negative electrode plate is a negative electrode plate of the sodium battery without a negative electrode. During the initial charge process, the electrolyte components first undergo reductive decomposition on the primer coating layer on the surface of the current collector, and some of the decomposed products are deposited on the primer coating layer to form SEI. Subsequently, the sodium ions in the electrolyte are desolvated at the interface between the negative electrode and the electrolyte, and are deposited on the primer coating layer through the SEI. The primer coating layer can effectively reduce the overpotential of sodium metal deposition, inhibit the formation of sodium dendrites, and help to improve the cycling performance of the sodium ion battery. During the discharge process, the metal sodium can be converted into sodium ions and returned to the positive electrode, thus realizing cyclic charge and discharge. The anion in the sulfur-containing organic sodium salt or the boron-containing organic sodium salt has strong bonding force with sodium ion, and it is easier to participate in the solvation structure of the electrolyte, and it is easy to contact the negative electrode surface accompanied by sodium ion deposition, and reduced on the negative electrode surface to produce SEI mainly composed of sulfides and borides, which greatly improves the structural stability and uniformity of SEI on the sodium metal surface. On one hand, SEI containing a large amount of sulfides and borides is not easy to undergo secondary decomposition and regeneration, which reduces the consumption of sodium inside the battery and improves the high-temperature cycling performance of the sodium ion battery; and on the other hand, SEI with a stable structure and a uniform distribution can reduce the direct contact between the electrolyte and sodium metal, reduce side reactions between the electrolyte and sodium metal, inhibit the generation of hydrogen in high-temperature cycle of the sodium ion battery, and improve the high-temperature gas generation phenomenon of the sodium ion battery.

The applicant has unexpectedly found that the stability and uniformity of SEI can be increased by means of the cooperation between the primer coating layer and the electrolyte by controlling the areal density X g/m² of the primer coating layer of the sodium ion battery and the mass content Y% of the sulfur-containing organic sodium salt or the boron-containing organic sodium salt based on the total mass of the electrolyte within a numerical range of 0.84 ≤ Y - 0.01X ≤ 5.84, thus improving the high-temperature cycling performance of the sodium ion battery, the high-temperature gas production phenomenon of the sodium ion battery, and the electrochemical performance and safety performance of the sodium ion battery at a high temperature.

In some embodiments, the anion of the sulfur-containing organic sodium salt includes at least one of the structures represented by formula I and formula II, 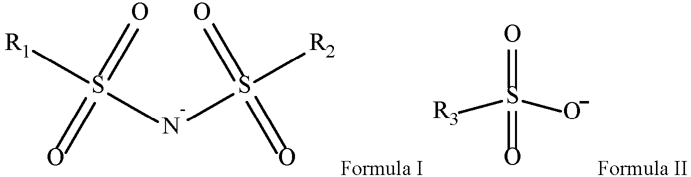 wherein R₁ and R₂ are each independently selected from at least one of fluorine and substituted or unsubstituted C₁-C₆ alkyl, and R₃ is substituted or unsubstituted C₁-C₆ alkyl.

As used herein, the term "C₁-C₆ alkyl" refers to a straight or branched hydrocarbon chain radical that is composed of carbon and hydrogen atoms only without unsaturation, has one to six carbon atoms, and is attached to the rest of the molecule via a single bond.

As used herein, the term "substituted" means that at least one hydrogen atom of the compound or chemical moiety is substituted by another chemical moiety with a substituent, in which each substituent is independently selected from: hydroxyl, mercapto, amino, cyano, nitro, aldehyde group, halogen atoms, alkenyl, alkynyl, aryl, heteroaryl, C₁-C₆ alkyl, and C₁-C₆ alkoxy.

In some embodiments, R₁ and R₂ each independently selected from fluorine and C₁-C₃ fluoroalkane.

In some embodiments, R₃ is selected from C₁-C₃ fluoroalkane.

As used herein, the term "C₁-C₃ fluoroalkane" refers to an alkane having one to three carbon atoms and being substituted by at least one fluorine.

In some embodiments, the sulfur-containing organic sodium salt includes one or more of sodium trifluoromethanesulfonate, sodium bis(fluoromethanesulfonyl)imide, sodium bis(trifluoromethanesulfonyl)imide, and sodium (fluorosulfonyl) (trifluoromethanesulfonyl)imide.

Selecting a suitable sulfur-containing organic sodium salt can improve the high-temperature cycling performance of the sodium ion battery and improve the high-temperature gas production phenomenon of the sodium ion battery.

In some embodiments, the sulfur-containing organic sodium salt includes one or more of sodium trifluoromethanesulfonate, sodium bis(fluoromethanesulfonyl)imide, and sodium bis(trifluoromethanesulfonyl)imide.

Selecting a suitable sulfur-containing organic sodium salt can further improve the high-temperature cycling performance of the sodium ion battery and further improve the high-temperature gas production phenomenon of the sodium ion battery.

In some embodiments, the boron-containing organic sodium salt includes one or more of sodium tetraphenylborate, sodium bis(salicylic acid-2-)borate, sodium salicylate benzenediol borate, sodium difluorooxalate borate and sodium bisoxalate borate.

Selecting a suitable boron-containing organic sodium salt can improve the high-temperature cycling performance of the sodium ion battery and improve the high-temperature gas production phenomenon of the sodium ion battery.

In some embodiments, the boron-containing organic sodium salt includes one or two of sodium difluorooxalate borate and sodium bisoxalate borate.

Selecting a suitable boron-containing organic sodium salt can improve the initial coulombic efficiency and normal-temperature cycling performance of the sodium ion battery, and at the same time, the sodium ion battery has an excellent high-temperature cycling performance and less high-temperature gas production.

In some embodiments, the areal density of the primer coating layer X g/cm² is 5 g/cm² - 50 g/cm².

In some embodiments, the areal density X g/cm² of the primer coating layer is any one of 5 g/cm² - 10 g/cm², 10 g/cm² - 20 g/cm², 20 g/cm² - 30 g/cm², 30 g/cm² - 40 g/cm², 40 g/cm² - 50 g/cm², 5 g/cm² - 15 g/cm²,15 g/cm² - 25 g/cm², 25 g/cm² - 35 g/cm², 35 g/cm² - 45 g/cm², 45 g/cm² - 50 g/cm², 10 g/cm² - 30 g/cm², and 10 g/cm² - 40 g/cm².

An areal density of the primer coating layer within an appropriate range can optimize the sodium metal deposition effect and improve the coulombic efficiency and cycling performance of the sodium ion battery. At the same time, an areal density of the primer coating layer within an appropriate range can increase the energy density of the sodium ion battery to meet the use requirements of the sodium ion battery.

In summary, an areal density of the primer coating layer within an appropriate range makes the sodium ion battery have excellent high-temperature cycling performance, initial coulombic efficiency and normal-temperature cycling performance, and less high-temperature gas production and normal-temperature gas production.

In some embodiments, the primer coating layer comprises one or more of superconducting carbon black, Ketjen black, acetylene black, carbon nanotubes, and graphene.

In some embodiments, the primer coating layer comprises at least one of a mesocarbon microsphere, graphite, natural graphite, expanded graphite, artificial graphite, glassy carbon, a carbon-carbon composite, carbon fiber, hard carbon, porous carbon, highly oriented graphite, three-dimensional graphite, and carbon black.

The carbon material in the primer coating layer can inhibit the formation of sodium dendrites, which is beneficial to improving the cycling performance of the sodium ion battery.

In some embodiments, the primer coating layer comprises a polymer binder.

In some embodiments, the polymer binder includes at least one of sodium cellulose, sodium carboxymethyl cellulose, hydroxypropyl cellulose, sodium hydroxymethylcellulose, potassium hydroxymethylcellulose, diacetyl cellulose, polyacrylic acid, sodium alginate, styrene-butadiene rubber, acrylate-butadiene rubber, polypyrrole, polyaniline, epoxy resin and guar gum.

In some embodiments, the negative electrode current collector includes at least one of a metal foil, a metal foam current collector, a metal mesh current collector, a carbon felt current collector, a carbon cloth current collector, a carbon paper current collector and a composite current collector.

In some embodiments, the metal foil is optionally a copper foil, an aluminum foil, a stainless steel foil, an iron foil, a zinc foil, and a titanium foil, and the metal foam current collector is optionally a copper foam, an aluminum foam, a zinc foam, etc. The metal mesh current collector is optionally a copper mesh and an aluminum mesh. The composite current collector comprises a polymer base film and metal foils formed on both sides of the polymer base film. The composite current collector may have a "sandwich" structure, with the polymer base film in the middle and the metal foils on both sides. The polymer base film is optionally one of polyamide, polyterephthalate, polyimide, polyethylene, polypropylene, polystyrene, polyvinyl chloride, an acrylonitrile-butadiene-styrene copolymer, polybutylene terephthalate, poly(p-phenylene terephthalamide), poly(propylene-ethylene), polyoxymethylene, epoxy resin, phenolic resin, polytetrafluoroethylene, polyvinylidene fluoride, silicone rubber and polycarbonate.

In some embodiments, the electrolyte further comprises a second sodium salt, the second sodium salt including at least one of sodium hexafluorophosphate, sodium tetrafluoroborate, sodium hexafluoroarsenate, sodium perchlorate, and sodium trifluoroacetate.

The bonding force between the anion and sodium ion in the second sodium salt is weaker than that in the first sodium salt, but it is conducive to realizing the rapid deposition and stripping of sodium metal and improving the dynamic performance of the battery. Especially in the battery without a negative electrode, the second sodium salt can effectively ensure the capacity and cycling performance of the battery. The second sodium salt can effectively optimize the deposition and stripping of sodium metal and can be used to improve the cycling performance of the sodium ion battery. At the same time, an appropriate concentration of sodium salt enables the electrolyte to have appropriate viscosity and excellent ionic conductivity, which overall improves the electrochemical performance of the sodium ion battery.

In some embodiments, the sodium ion battery satisfies the following relationship: Y + Z ≥ 3 and/or Z/Y ≥ 1.21,
wherein Y% is the mass content of the first sodium salt, based on the total mass of the electrolyte; and Z% is the mass content of the second sodium salt, based on the total mass of the electrolyte.

As mentioned above, the first sodium salt includes the sulfur-containing organic sodium salt or the boron-containing organic sodium salt, which can easily participate in forming SEI with a stable structure and a uniform distribution, and is used to improve the high-temperature cycling performance of the sodium ion battery and reduce the high-temperature gas production phenomenon of the sodium ion battery. The second sodium salt is used to optimize the deposition and stripping of sodium metal and improve the cycling performance of the sodium ion battery.

The applicant has unexpectedly discovered that the mass content Y% of the first sodium salt based on the total mass of the electrolyte and the mass content Y% of the second sodium salt based on the total mass of the electrolyte are controlled within a numerical range of Y + Z ≥ 3 and/or Z/Y ≥ 1.21, the initial coulombic efficiency, normal-temperature cycling performance and high-temperature cycling performance of the sodium ion battery can be improved by means of the cooperation of the effect of the first sodium salt on easy formation of a stable SEI and the effect of the second sodium salt on efficient deposition and stripping of metal sodium, and the electrochemical performance of the sodium ion battery can be improved.

In some embodiments, the mass content of the second sodium salt is 1% - 40%, based on the total mass of the electrolyte.

In some embodiments, the mass content of the second sodium salt is any one of 1% - 10%, 10% - 20%, 20% - 30%, 30% - 40%, 7% - 35%, 10% - 35%, and 10% - 40%, based on the total mass of the electrolyte.

On one hand, the second sodium salt with an appropriate mass content can optimize the deposition and stripping of sodium metal, which improves the cycling performance of the sodium ion battery; and on the other hand, it enables the electrolyte to have an appropriate viscosity and an excellent ionic conductivity, which improves the electrochemical performance of the sodium ion battery.

In summary, the second sodium salt with an appropriate mass content can improve the initial coulombic efficiency, normal-temperature cycling performance and high-temperature cycling performance of the sodium ion battery, and reduce the high-temperature gas production performance of the sodium ion battery.

In some embodiments, the electrolyte further comprises a solvent, and the mass content of the solvent is 50% - 98%, based on the total mass of the electrolyte.

In some embodiments, the electrolyte further comprises a solvent, and the mass content of the solvent is any one of 50% - 60%, 60% - 70%, 70% - 80%, 80% - 90%, 90% - 95%, 50% - 70%, 50% - 80%, 50% - 90%, 50% - 85%, and 60% - 85%, based on the total mass of the electrolyte.

The solvent with an appropriate mass content can improve the initial coulombic efficiency, normal-temperature cycling performance and high-temperature cycling performance of the sodium ion battery, and reduce the high-temperature gas production performance of the sodium ion battery.

In some embodiments, the solvent includes an ether solvent, optionally at least one of ethylene glycol dimethyl ether, diethylene glycol dimethyl ether, triethylene glycol dimethyl ether, tetraethylene glycol dimethyl ether, ethylene glycol diethyl ether, ethylene glycol formate ether, ethylene glycol dibutyl ether, 1,3-dioxolane, 1,4-dioxane, tetrahydrofuran, methyltetrahydrofuran, 1,1,2,2-tetrafluoroethyl methyl ether, 2,2,3,3-tetrafluoropropyl methyl ether, 1,1,2,2-tetrafluoroethyl-2,2,2-trifluoroethyl ether, bis-(2,2,2-trifluoroethyl)ether, 1,1,2,2-tetrafluoroethyl-2,2,3,3-tetrafluoropropyl ether, methyl nonafluorobutyl ether, bis-(1,1,2,2-tetrafluoroethyl)ether and difluoromethyl-2,2,2-trifluoroethyl ether.

In some embodiments, the solvent includes at least one of ethylene glycol dimethyl ether, diethylene glycol dimethyl ether, triethylene glycol dimethyl ether, tetraethylene glycol dimethyl ether, ethylene glycol diethyl ether, ethylene glycol formate ether, ethylene glycol dibutyl ether, 1,3-dioxolane, 1,4-dioxane, tetrahydrofuran and methyltetrahydrofuran.

The molecules of the ether solvent can build a stable electrode/electrolyte interface on the surface of the primer coating layer of the sodium ion battery and form a stable SEI, which reduces the electrochemical polarization, improves the coulombic efficiency, normal-temperature cycling performance and high-temperature cycling performance of the sodium ion battery, reduces the normal-temperature gas production phenomenon and high-temperature gas production phenomenon of the sodium ion battery, and broadens the service temperature of the sodium ion battery.

In some embodiments, the solvent includes an ester solvent, which may selected from at least one of vinylene carbonate, ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolyte also optionally comprises additional additives that can improve some properties of the sodium ion battery, such as additives that improve the overcharge performance of the sodium ion battery, and additives that improve the thermal stability of the electrolyte.

In some embodiments, the sodium ion battery is a sodium battery without a negative electrode.

In the sodium battery without a negative electrode, the metal sodium on the negative electrode is generated during the subsequent cycling, and the sodium ion battery has no voltage before the initial charge, so the sodium ion battery can be stored for a long time without self-discharge, and even if the battery is short-circuited, it will not generate current, which is extremely safe. Since there is no negative electrode active material on the surface of the negative electrode current collector and only the negative electrode current collector is used, the battery can achieve a higher energy density.

### [Positive electrode plate]

In some embodiments, the positive electrode plate comprises a positive electrode current collector and a positive electrode active material layer formed on at least part of the surface of the positive electrode current collector. The positive electrode active material layer comprises a positive electrode active material, and the positive electrode active material may include at least one of a layered transition metal oxide, a polyanionic compound and a Prussian blue compound.

The transition metal in the layered transition metal oxide may be at least one of Mn, Fe, Ni, Co, Cr, Cu, Ti, Zn, V, Zr, and Ce. Optionally, the layered transition metal oxide is for example NaxMO₂, wherein M is one or more of Ti, V, Mn, Co, Ni, Fe, Cr, and Cu, and 0 < x ≤ 1.

The polyanionic compound may be a compound having a metal ion, a transition metal ion, and a tetrahedral (YO₄)ₙ₋ anion unit. The metal ion is optionally one of sodium ion, lithium ion, potassium ion, and zinc ion; the transition metal is optionally at least one of Mn, Fe, Ni, Co, Cr, Cu, Ti, Zn, V, Zr, and Ce; Y is optionally at least one of P, S, and Si; and n represents the valence of (YO₄)ⁿ⁻.

The Prussian blue compound may be a class of compounds with sodium ions, transition metal ions and cyanide ions (CN-). The transition metal may be at least one of Mn, Fe, Ni, Co, Cr, Cu, Ti, Zn, V, Zr, and Ce. The Prussian blue compound is, for example, NaₐMe_{b}Me'_{c}(CN)₆, wherein Me and Me' are each independently at least one of Ni, Cu, Fe, Mn, Co, and Zn, 0 < a ≤ 2, 0 < b < 1, and 0 < c < 1.

The positive electrode active material layer may further comprise a conductive agent to improve the electrical conductivity of the positive electrode. The conductive agent is optionally one or more of Super P, acetylene black, carbon black, Ketjen black, carbon dots, carbon nanotubes, graphite, graphene and carbon nanofibers.

The positive electrode active material layer may further comprise a binder to firmly bond the positive electrode active material and an optional conductive agent onto the positive electrode current collector. The binder is optionally at least one of polyvinylidene fluoride (PVDF), polytetrafluoroethylene (PTFE), polyacrylic acid (PAA), polyvinyl alcohol (PVA), an ethylene-vinyl acetate copolymer (EVA), a styrene-butadiene rubber (SBR), carboxymethyl cellulose (CMC), sodium alginate (SA), polymethacrylic acid (PMA), and carboxymethyl chitosan (CMCS).

The positive electrode current collector may be a conductive carbon sheet, a metal foil, a carbon-coated metal foil, a porous metal plate, or a composite current collector. The conductive carbon material of the conductive carbon sheet is optionally one or more of Super P, carbon black, Ketjen black, carbon dots, carbon nanotubes, graphite, graphene and carbon nanofibers. The metal materials of the metal foil, the carbon-coated metal foil and the porous metal plate are each independently selected from at least one of copper, aluminum, nickel and stainless steel. The composite current collector may be a composite current collector formed by compounding the metal foil and a polymer base film.

In some embodiments, the positive electrode plate can be prepared by dispersing the above-mentioned components for preparing the positive electrode plate, such as a positive electrode active material, a conductive agent, a binder and any other components, in a solvent (e.g., N-methyl pyrrolidone) to form a positive electrode slurry; and coating the positive electrode current collector with the positive electrode slurry, followed by the procedures such as drying and cold pressing, so as to obtain the positive electrode plate.

### [Separator]

In some embodiments, the sodium ion battery further comprises a separator. The type of the separator is not particularly limited in the present application, and any well-known porous-structure separator with good chemical stability and mechanical stability may be selected.

In some embodiments, the material of the separator may be selected from at least one of polyethylene, polypropylene, polyvinylidene fluoride, aramid fibers, polyethylene terephthalate, polytetrafluoroethylene, polyacrylonitrile, polyimide, polyamide, polyester and natural fibers. The separator may be either a single-layer film or a multi-layer composite film, and is not limited particularly. When the separator is a multi-layer composite film, the materials in the respective layers may be same or different, which is not limited particularly.

In some embodiments, an electrode assembly may be formed by a positive electrode plate, a negative electrode plate and a separator by a winding process or a stacking process.

In some embodiments, the sodium ion battery may comprise an outer package. The outer package may be used to encapsulate the above-mentioned electrode assembly and electrolyte.

In some embodiments, the outer package of the sodium ion battery may be a hard housing, for example, a hard plastic housing, an aluminum housing, a steel housing, etc. The outer package of the sodium ion battery may also be a soft bag, such as a pouch-type soft bag. The material of the soft bag may be plastics, and the examples of plastics may comprise polypropylene, polybutylene terephthalate, polybutylene succinate, etc.

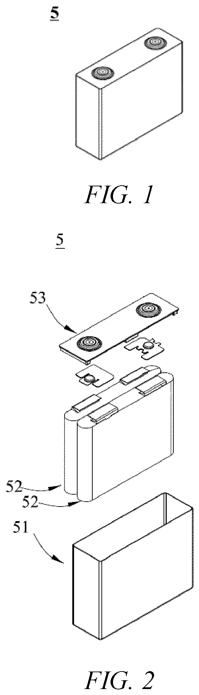

The shape of the sodium ion battery is not particularly limited in the present application and may be a cylindrical shape, a square shape or any other shape. For example, Fig. 1 shows a sodium ion battery 5 with a square structure as an example.

In some embodiments, with reference to Fig. 2, the outer package may include a housing 51 and a cover plate 53. Herein, the housing 51 may comprise a bottom plate and side plates connected to the bottom plate, and the bottom plate and the side plates enclose to form an accommodating cavity. The housing 51 has an opening in communication with the accommodating cavity, and the cover plate 53 may cover the opening to close the accommodating cavity. The positive electrode plate, the negative electrode plate, and the separator may be subjected to a winding process or a laminating process to form an electrode assembly 52. The electrode assembly 52 is encapsulated in the accommodating cavity. The electrolyte solution infiltrates the electrode assembly 52. The number of the electrode assembly 52 contained in the sodium ion battery 5 may be one or more, and can be selected by those skilled in the art according to specific actual requirements.

In some embodiments, a sodium ion battery can be assembled into a battery module, and the number of the sodium ion batteries contained in the battery module may be one or more, and the specific number can be selected by those skilled in the art according to the application and capacity of the battery module.

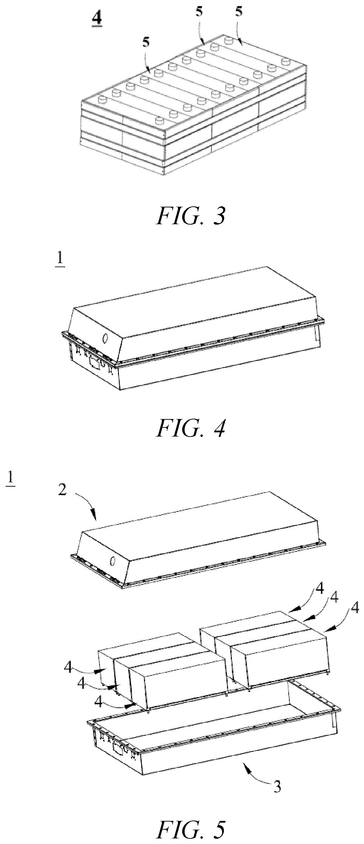

Fig. 3 shows a battery module 4 as an example. Referring to Fig. 3, in the battery module 4, a plurality of sodium ion batteries 5 can be provided in sequence in the length direction of the battery module 4. Apparently, the secondary batteries may also be arranged in any other manner. Furthermore, the plurality of sodium ion batteries 5 may be fixed by fasteners.

Optionally, the battery module 4 may further comprise an outer shell with an accommodating space, and the plurality of sodium ion batteries 5 are accommodated in the accommodating space.

In some embodiments, the above battery module may also be assembled into a battery pack, the number of the battery modules contained in the battery pack may be one or more, and the specific number can be selected by those skilled in the art according to the application and capacity of the battery pack.

Figs. 4 and 5 show a battery pack 1 as an example. Referring to Fig. 4 and Fig. 5, the battery pack 1 may comprise a battery box and a plurality of battery modules 4 provided in the battery box. The battery box comprises an upper box body 2 and a lower box body 3, wherein the upper box body 2 may cover the lower box body 3 to form a closed space for accommodating the battery modules 4. The plurality of the battery modules 4 may be arranged in the battery box in any manner.

In addition, the present application further provides a power consuming device. The power consuming device comprises at least one of the sodium ion battery, battery module, or battery pack provided by the present application. The sodium ion battery, battery module or battery pack may be used as a power source of the power consuming device or as an energy storage unit of the power consuming device. The power consuming device may include a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, ship, and satellite, an energy storage system, etc., but is not limited thereto.

As for the power consuming device, the sodium ion battery, the battery module or the battery pack can be selected according to the usage requirements thereof.

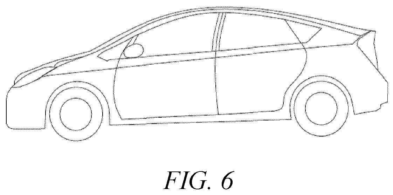

Fig. 6 shows a power consuming device as an example. The power consuming device may be a pure electric vehicle, a hybrid electric vehicle, a plug-in hybrid electric vehicle, etc. In order to meet the requirements of the power consuming device for a high power and a high energy density of a sodium ion battery, a battery pack or a battery module may be used.

As another example, the device may be a mobile phone, a tablet computer, a laptop computer, etc. The device is generally required to be thin and light, and may use a sodium ion battery as a power source.

### Examples

Hereinafter, the examples of the present application will be explained. The examples described below are exemplary and are merely for explaining the present application, and should not be construed as limiting the present application. The examples in which techniques or conditions are not specified are based on the techniques or conditions described in documents in the art or according to the product instructions. The reagents or instruments used therein on which no manufacturers are specified are all commercially available conventional products.

### I. Preparation method

### Example 1

### 1) Preparation of electrolyte

In a dry argon atmosphere glove box, 82 g of a solvent of ethylene glycol dimethyl ether, 3 g of a first sodium salt of sodium bis(fluoromethylsulfonyl)imide (NaFSI), and 15 g of a second sodium salt of sodium hexafluorophosphate (NaPF₆) were mixed, wherein the mass content of sodium bis(fluoromethylsulfonyl)imine was 3%, the mass content of sodium hexafluorophosphate was 15%, and the mass content of ethylene glycol dimethyl ether was 82%, based on the total mass of electrolyte.

### 2) Preparation of positive electrode plate

A positive electrode active material of Na₃V₂(PO₄)₃, a binder of polyvinylidene fluoride (PVDF) and a conductive agent of conductive carbon black (Super-P) were uniformly mixed in a solvent of N-methylpyrrolidone (NMP) at a mass ratio of 96%: 2% : 2% to prepare a positive electrode slurry, which was coated on the surface of an aluminum foil by an extrusion coater according to the mass requirements of a positive electrode active material per unit area and dried, and then the coated electrode plate was cold-pressed by a cold press with a designed pressed density of 2.5 g/cm³ to prepare a final positive electrode plate.

### 3) Preparation of negative electrode plate

Carbon nanotubes and sodium alginate were added to water and stirred to form a uniform slurry, the slurry was coated on an aluminum foil as a negative electrode current collector, dried and cut to obtain a negative electrode plate without a negative electrode structure, wherein the areal density of the carbon nanotube primer coating layer was 20 g/m².

### 4) Separator

A polyethylene film (PE separator) was used as a separator.

### 5) Preparation of battery

The above positive electrode plate, separator, and negative electrode plate were stacked in sequence to enable the separator to function for isolation between the positive and negative electrode plates, and the above electrolyte was added to assemble into a button battery.

### Examples 2-8

The batteries of Examples 2-8 were prepared in a similar way to the battery of Example 1, except that the mass content of sodium bis(fluoromethylsulfonyl)imine in the electrolyte or/and the areal density of the primer coating layer were adjusted, respectively. The specific adjusted parameters were shown in Table 1 below.

### Examples 9-15

The batteries of Examples 9-15 were prepared in a similar way to the battery of Example 1, except that sodium bis(fluoromethylsulfonyl)imine at a mass content of 3% was replaced with sodium bis(fluoromethylsulfonyl)imine at a mass content of 1.5%, sodium difluoro oxalate borate (NaDFOB) at a mass content of 1.5%, sodium (fluorosulfonyl) (trifluoromethylsulfonyl)imine at a mass content of 3%, sodium trifluoromethanesulfonate (NaOTf) at a mass content of 3%, sodium bis(trifluoromethanesulfonyl)imide (NaTFSI) at a mass content of 3%, sodium salicylate benzenediol borate (NaBDSB) at a mass content of 3%, sodium difluoro oxalate borate at a mass content of 3%, and sodium bisoxalate borate (NaBOB) at a mass content of 3%, respectively. The specific adjusted parameters were shown in Table 1 below.

### Examples 16-19

The batteries of Examples 16-19 were prepared in a similar way to the battery of Example 1, except that the areal density of the primer coating layer was adjusted. The specific adjusted parameters were shown in Table 1 below.

### Examples 20-21

The batteries of Examples 20-21 were prepared in a similar way to the battery of Example 1, except that the mass content of sodium bis(fluoromethylsulfonyl)imine and sodium hexafluorophosphate were adjusted, and the areal density of the carbon primer coating layer was adjusted to be 40 g/m². The specific adjusted parameters were shown in Table 1 below.

### Examples 22-25

The batteries of Examples 22-25 were prepared in a similar way to the battery of Example 1, except that sodium bis(fluoromethylsulfonyl)imide was replaced with boron hexafluorophosphate (NaBF₄), sodium hexafluoroarsenate (NaAsF₆), sodium perchlorate (NaClO₄), and sodium trifluoroacetate (CF₃COONa), respectively. The specific adjusted parameters were shown in Table 1 below.

### Examples 26-34

The batteries of Examples 26-34 were prepared in a similar way to the battery of Example 1, except that the mass content of sodium hexafluorophosphate and/or the mass content of sodium bis(fluoromethylsulfonyl)imide were adjusted. The specific adjusted parameters were shown in Table 1 below.

### Examples 35-36

The batteries of Examples 35-36 were prepared in a similar way to the battery of Example 1, except that ethylene glycol dimethyl ether was replaced with dimethyl carbonate and tetrahydrofuran, respectively. The specific adjusted parameters were shown in Table 1 below.

### Comparative example 1

The battery of Comparative example 1 was prepared in a similar way to the battery of Example 1, except that the preparation method of the negative electrode plate was adjusted: carbon nanotubes and sodium alginate were added to water and stirred to form a uniform slurry, and the slurry was coated on an aluminum foil as a negative electrode current collector, dried and cut to obtain a carbon nanotube primer coating layer, wherein the areal density of the carbon nanotube primer coating layer was 20 g/m²; a negative electrode active material of hard carbon, a conductive agent of acetylene black, a binder of styrene-butadiene copolymer (SBC) and a thickening agent of carboxymethyl cellulose (CMC) were stirred thoroughly and mixed in an appropriate amount of deionized water at a weight ratio of 90 : 5 : 4 : 1 to form a uniform negative electrode slurry; The negative electrode slurry was coated on the carbon nanotube primer coating layer, dried at 100°C, and pressed to obtain a negative electrode plate, and sodium bis(fluoromethylsulfonyl)imide was replaced with sodium hexafluorophosphate. The specific adjusted parameters were shown in Table 1 below.

### Comparative example 2

The battery of Comparative example 2 was prepared in a similar way to the battery of Example 1, except that sodium bis(fluoromethylsulfonyl)imide was replaced with sodium hexafluorophosphate, and the negative electrode plate was replaced with an aluminum foil without a carbon nanotube primer coating layer. The specific adjusted parameters were shown in Table 1 below.

### Comparative example 3

The battery of Comparative example 3 was prepared in a similar way to the battery of Comparative example 2, except that ethylene glycol dimethyl ether was replaced with dimethyl carbonate, respectively. The specific adjusted parameters were shown in Table 1 below.

### Comparative example 4

The battery of Comparative example 4 was prepared in a similar way to the battery of Example 1, except that the negative electrode plate was replaced with aluminum foil without a carbon nanotube primer coating layer. The specific adjusted parameters were shown in Table 1 below.

### Comparative example 5

The battery of Comparative example 5 was prepared in a similar way to the battery of Example 1, except that sodium bis(fluoromethylsulfonyl)imide was replaced with sodium hexafluorophosphate. The specific adjusted parameters were shown in Table 1 below.

### Comparative examples 6-7

The batteries of Comparative examples 6-7 were prepared in a similar way to the battery of Example 1, except that sodium bis(fluoromethylsulfonyl)imide was replaced with sodium fluorosulfonate and sodium tetrafluoroborate, respectively. The specific adjusted parameters were shown in Table 1 below.

### Comparative examples 8-11

The batteries of Comparative examples 8-11 were prepared in a similar way to the battery of Example 1, except that the mass content of sodium bis(fluoromethylsulfonyl)imine in the electrolyte or/and the areal density of the primer coating layer were adjusted, respectively, and thus Y-0.01X was adjusted. The specific adjusted parameters were shown in Table 1 below.

### II. Test method

### 1. Battery

### 1) Test of initial coulombic efficiency

At 25°C and normal pressure (0.1 MPa), the battery was charged to 3.5 V at a constant current rate of 0.1 C, and the charge capacity at this time was recorded as the initial charge capacity of the battery; and the battery was then left to stand for 5 min, then discharged to charged/discharged to 3.2 V at a constant current rate of 0.1 C, and left to stand for 5 min, and the discharge capacity at this time was recorded as the initial discharge capacity of the battery. The initial coulombic efficiency (%) of the battery = initial discharge capacity / initial charge capacity × 100%.

### 2) Cycling performance at normal temperature

At 25°C and normal pressure (0.1 MPa), the battery was charged to a voltage of 3.5 V at a constant current of 0.5 C, and then discharged to a voltage of 3.2 V at a constant current of 1 C. This was a charge-discharge cycle. The initial discharge capacity was regarded as 100%, the charge and discharge cycles were repeated for 500 times, the test was stopped, and the cycle capacity retention rate was recorded. The normal-temperature capacity retention rate was used as an indicator to evaluate the normal-temperature cycling performance of the battery.

### 3) High-temperature cycling performance

At 60°C and normal pressure (0.1 MPa), the battery was charged to a voltage of 3.5 V at a constant current of 0.5 C, and then discharged to a voltage of 3.2 V at a constant current of 1 C. This was a charge-discharge cycle. The initial discharge capacity was regarded as 100%, the charge and discharge cycles were repeated for 500 times, the test was stopped, and the cycle capacity retention rate was recorded. The high-temperature capacity retention rate was used as an indicator to evaluate the high-temperature cycling performance of the battery.

### 4) Normal-temperature gas production performance

At room temperature (25°C), the battery was charged to 3.5 V at a constant current of 0.5 C. After the battery was fully charged, the initial volume of the battery was measured using a drainage method. After stored at room temperature for 24 days, the battery was taken out. The battery volume was measured at room temperature using the drainage method. Based on the battery volume tested before storage, the volume expansion rate of the battery was calculated. The volume expansion rate (%) of the battery after 24 days of storage at 25°C = (battery volume measured after storage/battery volume measured before storage) - 1.

### 5) High-temperature gas production performance

At room temperature (25°C), the battery was charged to 3.5 V at a constant current of 0.5 C. After the battery was fully charged, the initial volume of the battery was measured using a drainage method. After stored in an oven at 60°C for 24 days, the battery was taken out. The battery was left to stand at room temperature for 60 minutes. The battery volume was measured using the drainage method within 60 minutes after cooling to room temperature. Based on the battery volume tested before storage, the volume expansion rate of the battery was calculated. The volume expansion rate (%) of the battery after 24 days of storage at 60°C = (battery volume measured after storage/battery volume measured before storage) - 1.

### III. Testing results and analysis of Examples and Comparative examples

The batteries of the examples and comparative examples are respectively prepared according to the method described above and various performance parameters thereof are measured. The results are shown in Table 1 below.

**Table 1 Preparation parameters and test results of Examples and Comparative examples**

| No. | First sodium salt | | Second sodium salt | | Z/Y | Y+Z | Solvent | | Areal densit y of carbo n coatin g layer X/(g/ m²) | Y - 0.01 X | Battery | | | | |
|---|---|---|---|---|---|---|---|---|---|---|---|---|---|---|---|
| | Name | Y | Name | Z | | | Name | Mass conte nt | | | Initial coulom bic efficien cy | Normal-tempera ture cycle capacity retentio n rate | High-tempera ture cycle capacity retentio n rate | Normal-tempera ture thicknes s expansi on rate | High-tempera ture thicknes s expansi on rate |
| Example 1 | NaFSI | 3 | NaPF₆ | 15.00 | 5.00 | 18.00 | Ethylene glycol dimethyl ether | 82.00 % | 20 | 2.8 | 95.01% | 92.15% | 86.68% | 0% | 0.26% |
| Example 2 | NaFSI | 1.04 | NaPF₆ | 16.96 | 16.31 | 18.00 | Ethylene glycol dimethyl ether | 82.00 % | 20 | 0.84 | 95.66% | 92.01% | 72.16% | 0% | 2.11% |
| Example 3 | NaFSI | 6.04 | NaPF₆ | 11.96 | 1.98 | 18.00 | Ethylene glycol dimethyl ether | 82.00 % | 20 | 5.84 | 94.36% | 92.03% | 72.65% | 0% | 2.09% |
| Example 4 | NaFSI | 1.2 | NaPF₆ | 16.80 | 14.00 | 18.00 | Ethylene glycol dimethyl ether | 82.00 % | 20 | 1 | 95.48% | 92.81% | 80.15% | 0% | 1.69% |
| Example 5 | NaFSI | 4.2 | NaPF₆ | 13.80 | 3.29 | 18.00 | Ethylene glycol dimethyl ether | 82.00 % | 20 | 4 | 94.88% | 92.15% | 80.63% | 0% | 1.96% |
| Example 6 | NaFSI | 3.2 | NaPF₆ | 14.80 | 4.63 | 18.00 | Ethylene glycol dimethyl ether | 82.00 % | 40 | 2.8 | 94.96% | 92.07% | 86.67% | 0% | 0.31% |
| Example 7 | NaFSI | 1.24 | NaPF₆ | 16.76 | 13.52 | 18.00 | Ethylene glycol dimethyl ether | 82.00 % | 40 | 0.84 | 95.47% | 92.01% | 72.22% | 0% | 1.73% |
| Example 8 | NaFSI | 6.24 | NaPF₆ | 11.76 | 1.88 | 18.00 | Ethylene glycol dimethyl ether | 82.00 % | 40 | 5.84 | 94.20% | 92.36% | 72.55% | 0% | 1.68% |
| Example 9 | NaFSI + NaDFOB | 1.5 + 1.5 | NaPF₆ | 15.00 | 5.00 | 18.00 | Ethylene glycol dimethyl ether | 82.00 % | 20 | 2.8 | 95.03% | 92.29% | 86.01% | 0% | 0.34% |
| Example 10 | Sodium (fluorosulfonyl)(tri fluoromethanesulf onyl)imide | 3 | NaPF₆ | 15.00 | 5.00 | 18.00 | Ethylene glycol dimethyl ether | 82.00 % | 20 | 2.8 | 95.06% | 92.24% | 86.06% | 0% | 0.32% |
| Example 11 | NaOTf | 3 | NaPF₆ | 15.00 | 5.00 | 18.00 | Ethylene glycol dimethyl ether | 82.00 % | 20 | 2.8 | 95.10% | 92.68% | 86.12% | 0% | 0.31% |
| Example 12 | NaTFSI | 3 | NaPF₆ | 15.00 | 5.00 | 18.00 | Ethylene glycol dimethyl ether | 82.00 % | 20 | 2.8 | 95.02% | 92.11% | 86.21% | 0% | 0.29% |
| Example 13 | NaBDSB | 3 | NaPF₆ | 15.00 | 5.00 | 18.00 | Ethylene glycol dimethyl ether | 82.00 % | 20 | 2.8 | 95.09% | 92.08% | 86.24% | 0% | 0.29% |
| Example 14 | NaDFOB | 3 | NaPF₆ | 15.00 | 5.00 | 18.00 | Ethylene glycol dimethyl ether | 82.00 % | 20 | 2.8 | 95.11% | 92.09% | 86.30% | 0% | 0.28% |
| Example 15 | NaBOB | 3 | NaPF₆ | 15.00 | 5.00 | 18.00 | Ethylene glycol dimethyl ether | 82.00 % | 20 | 2.8 | 95.09% | 92.30% | 86.09% | 0% | 0.33% |
| Example 16 | NaFSI | 3 | NaPF₆ | 15.00 | 5.00 | 18.00 | Ethylene glycol dimethyl ether | 82.00 % | 5 | 2.95 | 95.02% | 91.59% | 86.14% | 0% | 0.41% |
| Example 17 | NaFSI | 3 | NaPF₆ | 15.00 | 5.00 | 18.00 | Ethylene glycol dimethyl ether | 82.00 % | 10 | 2.5 | 95.07% | 92.31% | 86.26% | 0% | 0.40% |
| Example 18 | NaFSI | 3 | NaPF₆ | 15.00 | 5.00 | 18.00 | Ethylene glycol dimethyl ether | 82.00 % | 40 | 2.97 | 95.11% | 92.01% | 85.29% | 0% | 0.48% |
| Example 19 | NaFSI | 3 | NaPF₆ | 15.00 | 5.00 | 18.00 | Ethylene glycol dimethyl ether | 82.00 % | 50 | 2.4 | 95.09% | 92.17% | 85.33% | 0% | 0.51% |
| Example 20 | NaFSI | 1.04 | NaPF₆ | 5.00 | 4.81 | 6.04 | Ethylene glycol dimethyl ether | 93.96 % | 40 | 0.84 | 92.21% | 90.11% | 71.31% | 0% | 2.33% |
| Example 21 | NaFSI | 6.04 | / | / | / | 6.04 | Ethylene glycol dimethyl ether | 93.96 % | 40 | 5.84 | 86.66% | 0% | 0% | 0% | 3.24% |
| Example 22 | NaFSI | 3 | NaBF₄ | 15.00 | 5.00 | 18.00 | Ethylene glycol dimethyl ether | 82.00 % | 20 | 2.8 | 95.14% | 92.03% | 86.10% | 0% | 0.23% |
| Example 23 | NaFSI | 3 | NaAsF₆ | 15.00 | 5.00 | 18.00 | Ethylene glycol dimethyl ether | 82.00 % | 20 | 2.8 | 95.09% | 92.36% | 86.13% | 0% | 0.36% |
| Example 24 | NaFSI | 3 | NaClO₄ | 15.00 | 5.00 | 18.00 | Ethylene glycol dimethyl ether | 82.00 % | 20 | 2.8 | 95.07% | 92.12% | 86.59% | 0% | 0.29% |
| Example 25 | NaFSI | 3 | CF₃CO ONa | 15.00 | 5.00 | 18.00 | Ethylene glycol dimethyl ether | 82.00 % | 20 | 2.8 | 95.11% | 92.06% | 86.36% | 0% | 0.25% |
| Example 26 | NaFSI | 3 | NaPF₆ | 2.00 | 0.67 | 5.00 | Ethylene glycol dimethyl ether | 95.00 % | 20 | 2.8 | 90.02% | 60.31% | 20.37% | 0% | 0.69% |
| Example 27 | NaFSI | 3 | NaPF₆ | 3.63 | 1.21 | 6.63 | Ethylene glycol dimethyl ether | 93.37 % | 20 | 2.8 | 94.13% | 86.19% | 60.38% | 0% | 0.71% |
| Example 28 | NaFSI | 1 | NaPF₆ | 1.00 | 1.00 | 2.00 | Ethylene glycol dimethyl ether | 98.00 % | 20 | 0.8 | 88.15% | 0% | 0% | 0% | 2.06% |
| Example 29 | NaFSI | 0.5 | NaPF₆ | 0.50 | 1.00 | 1.00 | Ethylene glycol dimethyl ether | 99.00 % | 20 | 0.3 | 70.15% | 0% | 0% | 0% | 5.21% |
| Example 30 | NaFSI | 1.36 | NaPF₆ | 1.64 | 1.21 | 3.00 | Ethylene glycol dimethyl ether | 97.00 % | 20 | 1.16 | 93.09% | 70.61% | 60.21% | 0% | 1.36% |
| Example 31 | NaFSI | 3 | NaPF₆ | 10.00 | 3.33 | 13.00 | Ethylene glycol dimethyl ether | 87.00 % | 20 | 2.8 | 95.17% | 92.45% | 86.42% | 0% | 0.31% |
| Example 32 | NaFSI | 3 | NaPF₆ | 7.00 | 2.33 | 10.00 | Ethylene glycol dimethyl ether | 90.00 % | 20 | 2.8 | 95.16% | 92.16% | 84.64% | 0% | 0.46% |
| Example 33 | NaFSI | 3 | NaPF₆ | 35.00 | 11.67 | 38.00 | Ethylene glycol dimethyl ether | 62.00 % | 20 | 2.8 | 95.11% | 82.06% | 78.46% | 0% | 0.65% |
| Example 34 | NaFSI | 3 | NaPF₆ | 40.00 | 13.33 | 43.00 | Ethylene glycol dimethyl ether | 57.00 % | 20 | 2.8 | 95.03% | 80.50% | 72.47% | 0% | 0.67% |
| Example 35 | NaFSI | 3 | NaPF₆ | 15.00 | 5.00 | 18.00 | Dimethyl carbonate | 82.00 % | 20 | 2.8 | 40.26% | 0% | 0% | 3.21% | 5.69% |
| Example 36 | NaFSI | 3 | NaPF₆ | 15.00 | 5.00 | 18.00 | Tetrahydro furan | 82.00 % | 20 | 2.8 | 92.17% | 86.23% | 80.53% | 0% | 0.42% |
| Compara tive example 1 | / | / | NaPF₆ | 18.00 | / | 18.00 | Ethylene glycol dimethyl ether | 82.00 % | 20 + active materi al layer | / | 95.06% | 92.23% | 50.36% | 0% | 4.23% |
| Compara tive example 2 | / | / | NaPF₆ | 18.00 | / | 18.00 | Ethylene glycol dimethyl ether | 82.00 % | / | / | 95.02% | 92.31% | 47.12% | 0% | 4.44% |
| Compara tive example 3 | / | / | NaPF₆ | 18.00 | / | 18.00 | Dimethyl carbonate | 82.00 % | / | / | 40.13% | 0% | 0% | 3.68% | 5.83% |
| Compara tive example 4 | NaFSI | 3 | NaPF₆ | 15.00 | 5.00 | 18.00 | Ethylene glycol dimethyl ether | 82.00 % | / | / | 95.23% | 91.21% | 52.23% | 0% | 4.69% |
| Compara tive example 5 | / | / | NaPF₆ | 18.00 | / | 18.00 | Ethylene glycol dimethyl ether | 82.00 % | 20 | / | 95.11% | 91.61% | 49.16% | 0% | 4.36% |
| Compara tive example 6 | NaSO₃F | 3 | NaPF₆ | 15.00 | 5.00 | 18.00 | Ethylene glycol dimethyl ether | 82.00 % | 20 | 2.8 | 95.03% | 92.06% | 50.59% | 0% | 4.35% |
| Compara tive example 7 | NaBF₄ | 3 | NaPF₆ | 15.00 | 5.00 | 18.00 | Ethylene glycol dimethyl ether | 82.00 % | 20 | 2.8 | 95.05% | 92.19% | 49.38% | 0% | 4.12% |
| Compara tive example 8 | NaFSI | 0.70 | NaPF₆ | 17.30 | 24.71 | 18.00 | Ethylene glycol dimethyl ether | 82.00 % | 20 | 0.5 | 95.60% | 92.03% | 60.61% | 0% | 3.87% |
| Compara tive example 9 | NaFSI | 6.70 | NaPF₆ | 11.30 | 1.69 | 18.00 | Ethylene glycol dimethyl ether | 82.00 % | 20 | 6.5 | 93.37% | 92.43% | 62.48% | 0% | 3.69% |
| Compara tive example 10 | NaFSI | 0.80 | NaPF₆ | 17.20 | 21.50 | 18.00 | Ethylene glycol dimethyl ether | 82.00 % | 40 | 0.5 | 95.01% | 92.11% | 60.11% | 0% | 3.74% |
| Compara tive example 11 | NaFSI | 6.80 | NaPF₆ | 11.20 | 1.65 | 18.00 | Ethylene glycol dimethyl ether | 82.00 % | 40 | 6.5 | 93.63% | 91.31% | 63.15% | 0% | 3.59% |

According to the above results, it can be seen that the sodium ion batteries in Examples 1-36 include a positive electrode plate, a negative electrode plate and an electrolyte. The negative electrode plate comprises a negative electrode current collector of an aluminum foil and a carbon nanotube primer coating layer formed on the surface of the aluminum foil. The electrolyte comprises a first sodium salt, which includes at least one of a sulfur-containing organic sodium salt and a boron-containing organic sodium salt. The areal density X g/m² of the carbon coating layer and the mass content Y% of the first sodium salt based on the total mass of the electrolyte satisfy the following relationship: 0.84 ≤ Y - 0.01X ≤ 5.84. It can be seen from the comparisons of Examples 1-5 and 9-15 with Comparative examples 1-2 and 4 -9, Examples 6-8 with Comparative examples 10-11, and Example 35 with Comparative example 3 that by controlling the areal density X g/m² of the carbon coating layer on the negative electrode plate and the mass content Y% of the first sodium salt based on the total mass of the electrolyte to satisfy the following relationship: 0.84 ≤ Y - 0.01X ≤ 5.84, the high-temperature cycle retention rate of the sodium ion battery can be increased and the high-temperature thickness expansion rate of the sodium ion battery can be reduced, and the high-temperature cycling performance of the sodium ion battery can be significantly improved, the high-temperature gas production phenomenon of the sodium ion battery can be significantly reduced, and the electrochemical performance and safety performance of the sodium ion battery at a high temperature can be significantly improved. At the same time, the sodium ion battery has good initial coulombic efficiency and normal-temperature cycling performance and less normal-temperature gas production, which broadens the service temperature of the sodium ion battery.

It can be seen from Examples 1-15 that the first sodium salt was sodium bis(fluoromethylsulfonyl)imide, sodium bis(fluoromethylsulfonyl)imide in combination with sodium difluoroxalate borate, sodium (fluorosulfonyl )(trifluoromethanesulfonyl)imide, sodium trifluoromethanesulfonate, sodium bis(trifluoromethanesulfonyl)imide, sodium salicylate benzenediol borate, sodium difluorooxalate borate or sodium bisoxalate borate. It can be seen from the comparison of Examples 1-5 and 9-15 with Comparative examples 6-7 that the first sodium salt includes at least one of a sulfur-containing organic sodium salt and a boron-containing organic sodium salt, which can significantly improve the high-temperature cycling performance of the sodium ion battery and reduce the high-temperature gas production phenomenon of the sodium ion battery.

It can be seen from the comparison between Examples 1 and 11-12 and Example 10 that the first sodium salt was sodium trifluoromethanesulfonate, sodium bis(fluoromethylsulfonyl)imide or sodium bis(trifluoromethanesulfonyl)imide, which can further improve the high-temperature cycling performance of the sodium ion battery and reduce the high-temperature gas production phenomenon of the sodium ion battery. It can be seen from the comparison between Examples 14-15 with Example 13 that the first sodium salt was sodium difluorooxalate borate or sodium bisoxalate borate, which can improve the initial coulombic efficiency and normal-temperature cycling performance of the sodium ion battery, and meanwhile the sodium ion battery has an excellent high-temperature cycling performance and less high-temperature gas production.

It can be seen from Examples 1 and 16-19 that the areal density of the primer coating layer was 5 g/cm² - 50 g/cm², and the sodium ion battery has excellent high-temperature cycling performance, initial coulombic efficiency and normal-temperature cycling performance, while the sodium ion battery has less high-temperature gas production and normal-temperature gas production, which broadens the service temperature of the sodium ion battery.

It can be seen from the comparison between Example 20 with Example 21 that the electrolyte comprises a second sodium salt, which can improve the initial coulombic efficiency, normal-temperature cycling performance and high-temperature cycling performance of the sodium ion battery and reduce the normal-temperature gas production phenomenon and high-temperature gas production phenomenon of the sodium ion battery.

It can be seen from Examples 1 and 22-25 that the second sodium salt was sodium hexafluorophosphate, sodium tetrafluoroborate, sodium hexafluoroarsenate, sodium perchlorate or sodium trifluoroacetate, and the sodium ion battery has excellent high-temperature cycling performance, initial coulombic efficiency and normal-temperature cycling performance, while the sodium ion battery has less normal-temperature gas production and high-temperature gas production, which broadens the service temperature of the sodium ion battery.

It can be seen from the comparison between Examples 1-5, 26-27 and 30-34 with Examples 28-29 that the mass content Y% of the first sodium salt based on the total mass of the electrolyte and the mass content Z% of the second sodium salt based on the total mass of the electrolyte satisfy the following relationship: Y + Z ≥ 3, which can improve the initial coulombic efficiency, normal-temperature cycling performance and high-temperature cycling performance of the sodium ion battery. It can be seen from the comparison between Examples 1-5, 27 and 30-34 with Examples 26 and 28-29 that the mass content Y% of the first sodium salt based on the total mass of the electrolyte and the mass content Z% of the second sodium salt based on the total mass of the electrolyte satisfy the following relationship: Z/Y ≥ 1.21, which can improve the initial coulombic efficiency, normal-temperature cycling performance and high-temperature cycling performance of the sodium ion battery. It can be seen from the comparison between Examples 1-5, 27 and 30-34 with Examples 26 and 28-29 that the mass content Y% of the first sodium salt based on the total mass of the electrolyte and the mass content Z% of the second sodium salt based on the total mass of the electrolyte satisfy the following relationship: Y + Z ≥ 3 and Z/Y ≥ 1.21, which can improve the initial coulombic efficiency, normal-temperature cycling performance and high-temperature cycling performance of the sodium ion battery.

It can be seen from the comparison between Examples 1-5, 26-28 and 30-34 with Example 29 that the mass content of the second sodium salt was 1% - 40%, based on the total mass of the electrolyte, which can improve the initial coulombic efficiency, normal-temperature cycling performance and high-temperature cycling performance of the sodium ion battery, and reduce the high-temperature gas production performance of the sodium ion battery. It can be seen from the comparison between Examples 1-5 and 31-33 with Examples 26-30 and 34 that the mass content of the second sodium salt was 7% - 35%, based on the total mass of the electrolyte, which can improve the initial coulombic efficiency of the sodium ion battery, and at the same time the battery can have excellent high-temperature cycling performance and normal-temperature cycling performance, and have less high-temperature gas production.

It can be seen from the comparison between Examples 1-5, 26-28 and 30-34 with Example 29 that the mass content of the solvent was 50% - 98%, based on the total mass of the electrolyte, which can improve the initial coulombic efficiency, normal-temperature cycling performance and high-temperature cycling performance of the sodium ion battery, and reduce the high-temperature gas production performance of the sodium ion battery. It can be seen from the comparison between Examples 1-5 and 31-34 with Examples 26-30 that the mass content of the solvent was 50% - 90%, based on the total mass of the electrolyte, which can improve the initial coulombic efficiency and high-temperature cycling performance of the sodium ion battery, and at the same time the sodium ion battery has an excellent normal-temperature cycling performance and less high-temperature gas production.

It can be seen from the comparison between Examples 1 and 36 with Example 35 that the ether solvent can improve the initial coulombic efficiency, normal-temperature cycling performance and high-temperature cycling performance of the sodium ion battery, and reduce the normal-temperature gas production phenomenon and high-temperature gas production phenomenon of the sodium ion battery, which improves the electrochemical performance and safety performance of sodium ions and broadens the service temperature of the sodium ion battery.

## Claims

1. A sodium ion battery, comprising a positive electrode plate, a negative electrode plate, and an electrolyte, wherein the negative electrode plate comprises a negative electrode current collector and a primer coating layer formed on the surface of the negative electrode current collector, the electrolyte comprises a first sodium salt, and the first sodium salt includes at least one of a sulfur-containing organic sodium salt and a boron-containing organic sodium salt,
the sodium ion battery satisfies the following relationship: 0.84 ≤ Y - 0.01X ≤ 5.84,
wherein X g/m² is the areal density of the primer coating layer, and Y% is the mass content of the first sodium salt, based on the total mass of the electrolyte.

2. The sodium ion battery according to claim 1, wherein the anion of the sulfur-containing organic sodium salt includes at least one of the structures represented by formula I and formula II, 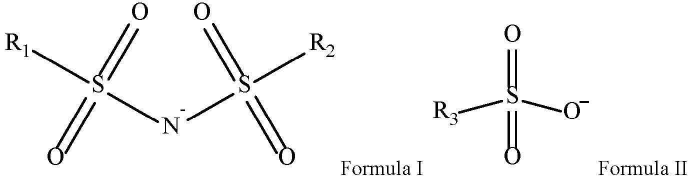 wherein R₁ and R₂ are each independently selected from at least one of fluorine and substituted or unsubstituted C₁-C₆ alkyl, and R₃ is substituted or unsubstituted C₁-C₆ alkyl.

3. The sodium ion battery according to claim 1 or 2, wherein the sulfur-containing organic sodium salt includes one or more of sodium trifluoromethanesulfonate, sodium bis(fluoromethanesulfonyl)imide, sodium bis(trifluoromethanesulfonyl)imide, and sodium (fluorosulfonyl) (trifluoromethanesulfonyl)imide, and optionally one ore more of sodium trifluoromethanesulfonate, sodium bis(fluoromethanesulfonyl)imide, and sodium bis(trifluoromethanesulfonyl)imide.

4. The sodium ion battery according to any one of claims 1-3, wherein the boron-containing organic sodium salt includes one or more of sodium tetraphenylborate, sodium bis(salicylic acid-2-)borate, sodium salicylate benzenediol borate, sodium difluorooxalate borate, and sodium bisoxalate borate, and optionally one ore two of sodium difluorooxalate borate and sodium bisoxalate borate.

5. The sodium ion battery according to any one of claims 1-4, wherein the areal density X g/cm² of the primer coating layer is 5 g/cm² - 50 g/cm².

6. The sodium ion battery according to any one of claims 1-5, wherein the primer coating layer comprises one or more of superconducting carbon black, Ketjen black, acetylene black, carbon nanotubes, and graphene.

7. The sodium ion battery according to any one of claims 1-6, wherein the electrolyte further comprises a second sodium salt, the second sodium salt including at least one of sodium hexafluorophosphate, sodium tetrafluoroborate, sodium hexafluoroarsenate, sodium perchlorate, and sodium trifluoroacetate.

8. The sodium ion battery according to claim 7, wherein the sodium ion battery satisfies the following relationship: Y + Z ≥ 3 and/or Z/Y ≥ 1.21,
wherein Y% is the mass content of the first sodium salt, based on the total mass of the electrolyte; and Z% is the mass content of the second sodium salt, based on the total mass of the electrolyte.

9. The sodium ion battery according to claim 7 or 8, wherein the mass content of the second sodium salt is 1% - 40%, optionally 7% - 35%, based on the total mass of the electrolyte.

10. The sodium ion battery according to any one of claims 1-9, wherein the electrolyte further comprises a solvent, and the mass content of the solvent is 50% - 98%, optionally 50% - 90%, based on the total mass of the electrolyte.

11. The sodium ion battery according to claim 10, wherein the solvent includes an ether solvent, optionally at least one of ethylene glycol dimethyl ether, diethylene glycol dimethyl ether, triethylene glycol dimethyl ether, tetraethylene glycol dimethyl ether, ethylene glycol diethyl ether, ethylene glycol formate ether, ethylene glycol dibutyl ether, 1,3-dioxolane, 1,4-dioxane, tetrahydrofuran, methyltetrahydrofuran, 1,1,2,2-tetrafluoroethyl methyl ether, 2,2,3,3-tetrafluoropropyl methyl ether, 1,1,2,2-tetrafluoroethyl-2,2,2-trifluoroethyl ether, bis-(2,2,2-trifluoroethyl)ether, 1,1,2,2-tetrafluoroethyl-2,2,3,3-tetrafluoropropyl ether, methyl nonafluorobutyl ether, bis-(1,1,2,2-tetrafluoroethyl)ether, and difluoromethyl-2,2,2-trifluoroethyl ether.

12. The sodium ion battery according to any one of claims 1-11, wherein the sodium ion battery is a sodium battery without a negative electrode.

13. A battery module, comprising a sodium ion battery according to any one of claims 1 to 12.

14. A battery pack, comprising at least one of a sodium ion battery according to any one of claims 1 to 12 or a battery module according to claim 13.

15. A power consuming device, comprising at least one selected from a sodium ion battery according to any one of claims 1 to 12, a battery module according to claim 13 and a battery pack according to claim 14.
